# EUROPÄISCHE PATENTSCHRIFT

(11) **EP 0 472 906 B1**
(45) Veröffentlichungstag und Bekanntmachung des Hinweises auf die Patenterteilung: **12.04.1995**
(21) Anmeldenummer: 91112374.3
(22) Anmeldetag: 24.07.1991
(51) Int. Cl.: B29D 9/00, B29C 47/28

(54) **Verfahren und Vorrichtung zum Erwärmen von Deckschichten zur Herstellung von Sandwichelementen aus Mehrkomponenten-Kunststoffen**
Method and apparatus for heating coverings for the production of sandwich elements from multicomponent plastics
Procédé et dispositif pour le chauffage de couches extérieures pour la fabrication d'éléments-sandwich à partir de matières plastiques à plusieurs composants

(30) Priorität: 03.08.1990 DE 4024756
(43) Veröffentlichungstag der Anmeldung: 04.03.1992
(73) Patentinhaber: Siempelkamp Handling Systeme GmbH & Co., 82515 Wolfratshausen (DE)
(72) Erfinder: Gamboc, Rolf, W-8028 Taufkirchen (DE); Dimperl, Peter, W-8000 München 90 (DE)
(74) Vertreter: Andrejewski, Walter

(56) Entgegenhaltungen:
- DE-A- 1 925 617
- DE-A- 2 536 101
- DE-A- 2 854 911
- DE-C- 3 138 232

## Beschreibung

Die Erfindung betrifft ein Verfahren und eine Vorrichtung nach dem Oberbegriff der Patentansprüche 1 bzw. 2.

Die Vorrichtung ist Teil einer sog. Doppelbandanlage, in der fortlaufend mit vorzugsweise metallischen Deckschichten kaschierte Sandwichelemente hergestellt werden. Die metallischen Deckschichten werden vor dem Einlaufen in die Vorrichtung nach der Erfindung häufig profiliert, damit das entsprechende Sandwichelement dann eine entsprechend profilierte Oberfläche aufweist.

Wesentliches Element einer solchen Anlage zur Herstellung von Sandwichelementen ist das sog. Doppelband, in das die zur oberen und unteren Kaschierung vorgesehenen Deckschichten im Abstand voneinander einlaufen, wobei zwischen die Deckschichten der Mehrkomponenten-Kunststoff eingebracht wird, welcher dort aufschäumt. Nach dem Ausreagieren des Mehrkomponenten-Kunststoffes tritt aus dem Doppelband ein endloser Strang aus, der dann nur noch abgelängt wird. Die abgelängten Sachwichelemente werden dann gestapelt. Die Deckschichten müssen vorgewärmt werden, um für eine gute Verbindung mit den reagierenden und aufschäumenden Mehrkomponenten-Kunststoffen zu sorgen. Hierbei ist es wichtig, daß die Deckschichten eine gleichmäßige, vorherbestimmte Temperatur aufweisen. Solange die Deckschichten kontinuierlich gefördert werden, d.h. die Doppelbandanlage ohne Unterbrechung arbeitet, stellt die Erwärmung der beiden Deckschichten keine besonderen Anforderungen. Bisher erfolgte die Erwärmung häufig mit Infrarotstrahlern. Bei metallisch blanken Oberflächen versagt jedoch die Infrarotheizung häufig, da die Strahlung zum überwiegenden Teil reflektiert und nicht von der Deckschicht absorbiert wird. Aus diesem Grunde ist es schon versucht worden, die Erwärmung mit Hilfe von Warmluft durchzuführen.

Bei der Infrarotheizung treten ferner Schwierigkeiten dann auf, wenn die Förderung der Deckschichten unterbrochen wird. Die Deckschichten werden während der Unterbrechung auf zu hohe Temperaturen aufgeheizt, da eine Wärmeableitung aus dem Infrarotstrahlerofen nicht in kurzer Zeit möglich ist. Die Deckschichten treten dann mit zu hoher Temperatur in das eigentliche Doppelband ein. Hierdurch wird die Reaktion des Mehrkomponenten-Kunststoffes stark beschleunigt, so daß das Aufschäumen zu schnell und nicht mit der gewünschten Struktur erfolgt. Es entsteht häufig ein Endprodukt, das nicht verwendbar ist.

Bei der bekannten Luftvorwärmung ist es bisher nicht möglich, die Deckschichttemperatur exakt zu regeln. Insbesondere bei kurzem Stillstand sind die durch die Trägheit des Systems bedingten Schwankungen nicht zu beseitigen und es ist nicht sicherzustellen, daß die Deckschichten auf konstanter Temperatur gehalten wurden. Auch hier treten bei Unterbrechung und beim Anfahren ähnliche Probleme wie bei dem Einsatz von Infrarotstrahlern auf.

Der Erfindung liegt daher die Aufgabe zugrunde, ein Verfahren und eine Vorrichtung der eingangs genannten Art zu schaffen, um eine Erwärmung der Deckschichten auf eine konstante Temperatur in sehr engen, festgelegten Grenzen auch dann sicherzustellen, wenn eine Unterbrechung der Förderung der Deckschichten erfolgt, d.h. auch beim Wiederanfahren sollen die Deckschichten nach kurzer Zeit mit der gewünschten Temperatur in das Doppelband eingefahren werden.

Diese Aufgabe wird bei einem Verfahren durch das Kennzeichen des Anspruches 1 und bei einer entsprechenden Vorrichtung durch das Kennzeichen des Anspruches 2 gelöst.

In vorteilhafter Weise ist die Vorrichtung so aufgebaut, wie in Anspruch 3 definiert.

Erfindungsgemäß erfolgt die Erwärmung der Deckschichten mit Hilfe von erwärmter Luft, die in einem Ofen im Kreislauf gefördert und hierbei erwärmt wird. Die Luft wird durch entsprechende Zuluft- und Rückluftkanäle, deren Austritt- und Eintrittsöffnungen dicht über und unter der zu erwärmenden Deckschicht sitzen, mit hoher Geschwindigkeit auf die Deckschicht geleitet. Hierdurch ist für einen guten Wärmeübergang gesorgt, da die Grenzschicht aufgerissen wird. Die Ein- und Austrittsöffnungen, die quer zur Produktionsrichtung liegen, wechseln einander in Förderrichtung der Deckschicht auf jeder Seite ab, so daß die aus den Öffnungen der Zuluftkanäle austretende erwärmte Luft auf die entsprechende Seite der Deckschicht auftrifft, nach Abgabe einer entsprechenden Wärmemenge umgelenkt und durch die Öffnungen der Rückführkanäle in den Kreislauf zurückgeleitet wird. Der Deckschichtentemperaturfühler stellt sicher, daß die Luft im Kreislauf immer auf einer Temperatur gehalten wird, die für die gewünschte Deckschichtentemperatur sorgt. Wenn die Förderung der Deckschicht unterbrochen wird, wird die Energieversorgung des Heizelementes ebenfalls abgeschaltet. Die Zuluftkanäle werden aus dem Kreislauf ausgeschaltet, so daß eine Kurzschlußförderung aus den Rücklaufkanälen direkt zu dem Verdichter entsteht. Gleichzeitig erfolgt eine Abförderung in die Außenluft, damit die überschußwärme abgeführt wird. Wenn die entsprechende Wärmemenge abgefördert ist, wird das Abblasen an die Umgebung unterbrochen. Die Förderung erfolgt dann nur noch in kurzgeschlossenem Kreislauf, wobei die Temperatur durch einen internen Temperaturfühler auf einem eingestellten Wert gehalten wird, der der gewünschten Temperatur der Deckschicht nach dem Wiederanfahren der Anlage entspricht.

Die Regelung der Luftströmung erfolgt durch entsprechende Luftklappen, Außen- und Innenklappen, die das Abblasen der Luft bei Stillstand an die Umgebung ermöglichen und die das Ausschalten, d.h. das Abtrennen der Zuluftkanäle, bei Unterbrechung der Deckschichtenförderung bewerkstelligen.

Diese Luftklappen können unterschiedlich gestaltet und betätigt werden. Auch die Steuerung der Temperaturfühler erfolgt so, daß beim Wiederanfahren die gewünschte Temperatur der Deckschichten vorliegt und erhalten wird.

Auf vorteilhafte Ausgestaltungen der Vorrichtung sind die Ansprüche 4 bis 9 gerichtet.

Im folgenden wird die Erfindung unter Hinweis auf die Zeichnung anhand verschiedener Ausführungsbeispiele näher erläutert.

Es zeigt:
- Figur 1: einen schematischen Querschnitt durch eine Ausführungsform einer Vorrichtung zur Erwärmung der oberen Deckschicht;
- Figur 2: einen der Fig. 1 entsprechenden Querschnitt durch eine Vorrichtung zur Erwärmung der unteren Deckschicht;
- Figur 3: einen Schnitt gemäß der Linie A-A der Fig. 1 bei kurzgeschlossener Luftförderung, d.h. bei Unterbrechung der Deckschichtenförderung;
- Figur 4: eine Draufsicht auf die Darstellung der Fig. 3 mit abgesperrten Zuluftkanälen, d.h. in kurzgeschlossenem Kreislauf, wie bei der Darstellung der Fig. 3;
- Figur 5: eine der Fig. 4 entsprechende Teilansicht einer anderen Ausführungsform der Innenklappen;
- Figur 6: einen Schnitt gemäß der Linie A-A der Fig. 1, jedoch im Unterschied zu der Darstellung nach der Fig. 3 in Heizstellung, d.h. bei geförderter Deckschicht und geschlossenem Luftkreislauf über die Deckschichtenoberflächen;
- Figur 7: eine Draufsicht auf die Darstellung der Fig. 6, mit in den Kreislauf eingeschalteten Zuluftkanälen, d.h. mit einer Strömung zur Erwärmung der Deckschichten, wie in Fig. 6 dargestellt;
- Figur 8: eine der Fig. 7 entsprechende Darstellung jedoch mit den Innenklappen in einer Stellung zur Versorgung der Zuluftkanäle mit erwärmter Luft;
- Figur 9: einen Schnitt gemäß der Linie B-B der Fig. 6 im wesentlichen durch die Zuluftkanäle bei Förderung im geschlossenen Kreislauf zur Erwärmung der bewegten Deckschicht auf der Ober- und Unterseite und
- Fig. 10: einen der Fig. 9 entsprechenden Schnitt, jedoch gemäß der Linie C-C der Fig. 6 durch die Rückführkanäle.

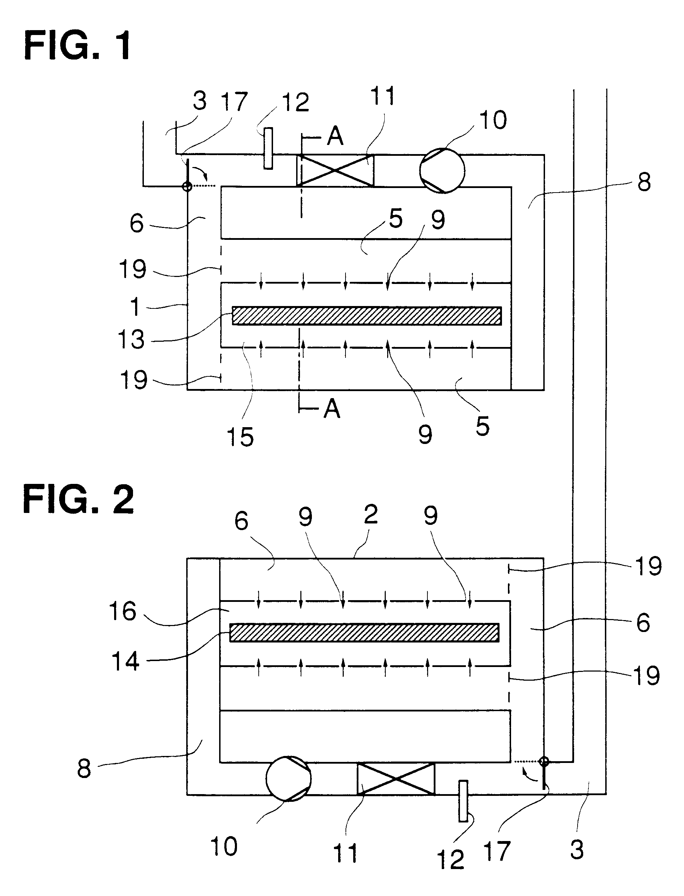

Die in den Zeichnungen schematisch dargestellte Vorrichtung - auch als "Ofen" bezeichnet - besteht grundsätzlich aus zwei derartigen Öfen 1 und 2, von denen einer der Erwärmung der oberen Deckschicht 13 und der andere der Erwärmung der unteren Deckschicht 14 dient, so wie es sich beim Betrachten der Fig. 1 und 2 als Einheit ergibt. Grundsätzlich sind beide Öfen gleich aufgebaut, so daß für gleiche Teile gleiche Bezugszeichen verwendet wurden. Jeder Ofen wird durch ein entsprechendes Blechgehäuse gebildet, in dem die einzelnen Kanäle und die weiteren Elemente und Bauteile angeordnet sind. Aus jedem Ofen heraus führt ein Abluftkanal 3, der normalerweise durch eine Außenklappe 17 vom Innenraum des Ofens getrennt ist. Hierdurch wird die in dem Ofen umgewälzte Luft in einem geschlossenen Kreislauf gefördert. Sie wird durch ein Heizelement 11, bei dem es sich vorzugsweise um ein elektrisches Widerstandsheizgerät mit kurzer Nachheizzeit und geringer Masse des Heizgitters handelt, erwärmt. Die Förderung der Luft erfolgt mit Hilfe eines Verdichters 10.

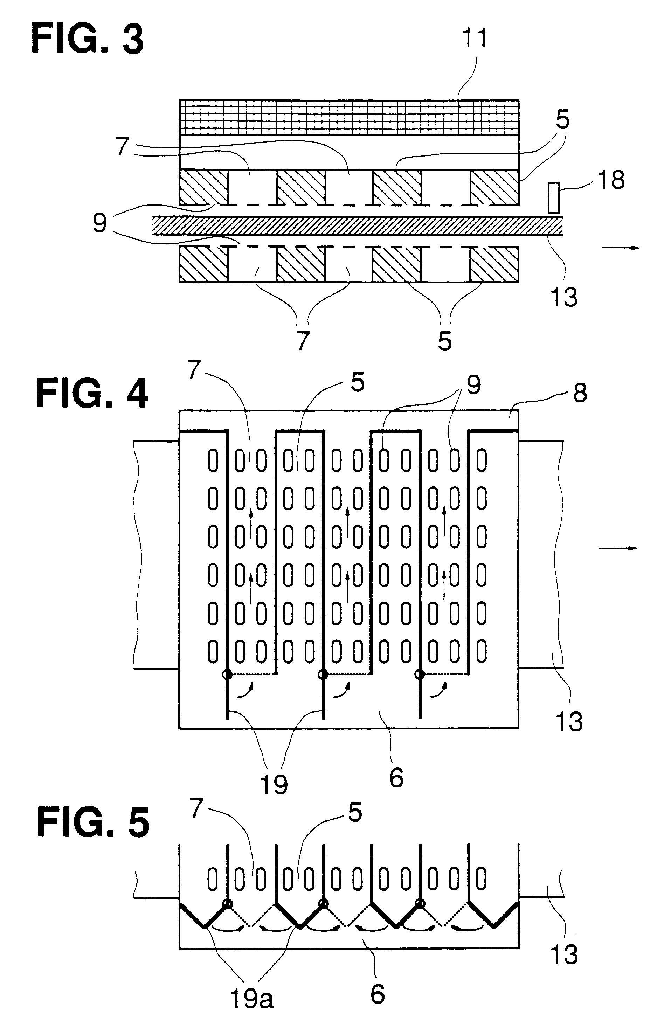

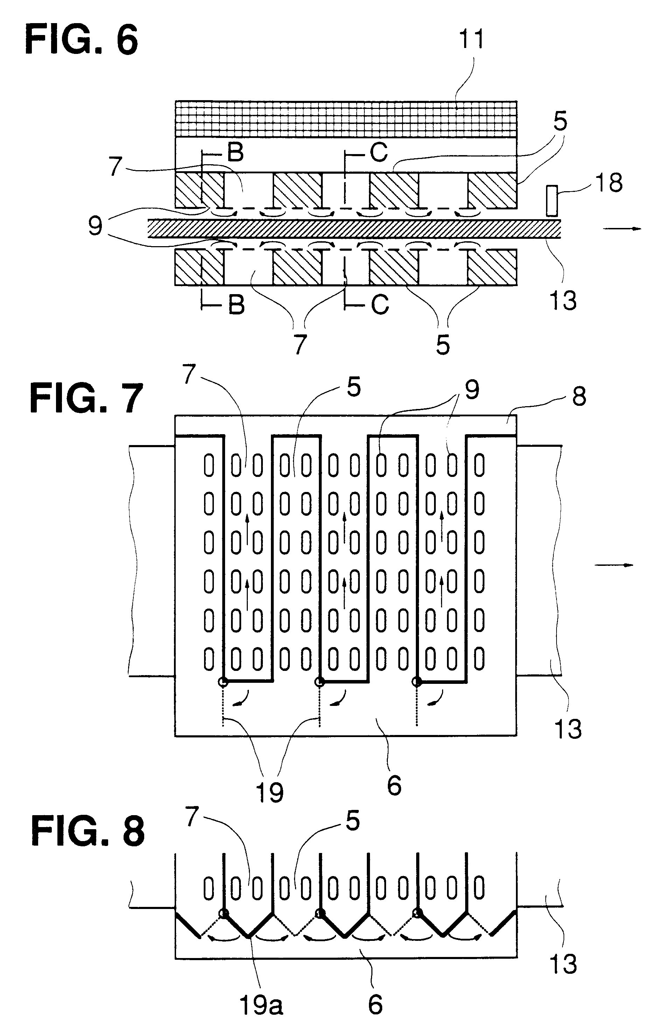

Beim Betrachten der entsprechenden Schnitte und Darstellungen (Querschnitt nach Fig. 1, Schnitt A-A nach Fig. 3 oder Fig. 6 und Draufsicht nach Fig. 4 oder Fig. 7) wird deutlich, daß auf jeder Seite der Deckschicht quer zu ihrer Förderrichtung verlaufende Zuluft- und Rückluftkanäle 5 und 7 abwechselnd angeordnet sind. An den Seiten der Zuluft- und Rückluftkanäle 5 und 7, die den Deckschichten zugekehrt sind, sind Austritts- und Eintrittsöffnungen 9 in Form von Schlitzen vorgesehen, die ebenfalls quer zur Förderrichtung 13 verlaufen. Zu den Zuluftkanälen 5 führt ein Zuförderkanal 6 und von den Rückluftkanälen 7 führt ein Rückförderkanal 8 in den Eintrittsbereich des Verdichters 10. Im Austrittsbereich des Heizelementes 11 ist ein interner Temperaturfühler 12 angeordnet.

Die obere Deckschicht 13 läuft durch einen Heizraum 15 und die untere Deckschicht 14 durch einen gleichen Heizraum 16. Diese Heizräume 15 und 16 werden nur dann mit erwärmter Luft versorgt, wenn eine entsprechende Vorwärmung der Deckschicht 13 bzw. 14 erfolgen soll. Wenn dieses, insbesondere bei einer Unterbrechung der Förderung der Deckschicht, nicht geschehen soll, wird die Förderung der Luft in diese Zonen 15 und 16 unterbrochen.

Dieses geschieht mit Hilfe von Innenklappen 19, die, wie in Fig. 4 dargestellt, die Zuluftkanäle 5 von dem Luftkreislauf abtrennen, d.h. den Luftkreislauf kurzschließen, so daß die in den Zuförderkanal 6 eintretende Luft unmittelbar durch die Rückführkanäle 7 in den Rückführkanal 8 und damit direkt zum Verdichter 10 gelangt. Eine Strömung durch die Schlitze 9 auf die entsprechende Oberfläche der Deckschicht findet dann nicht statt.

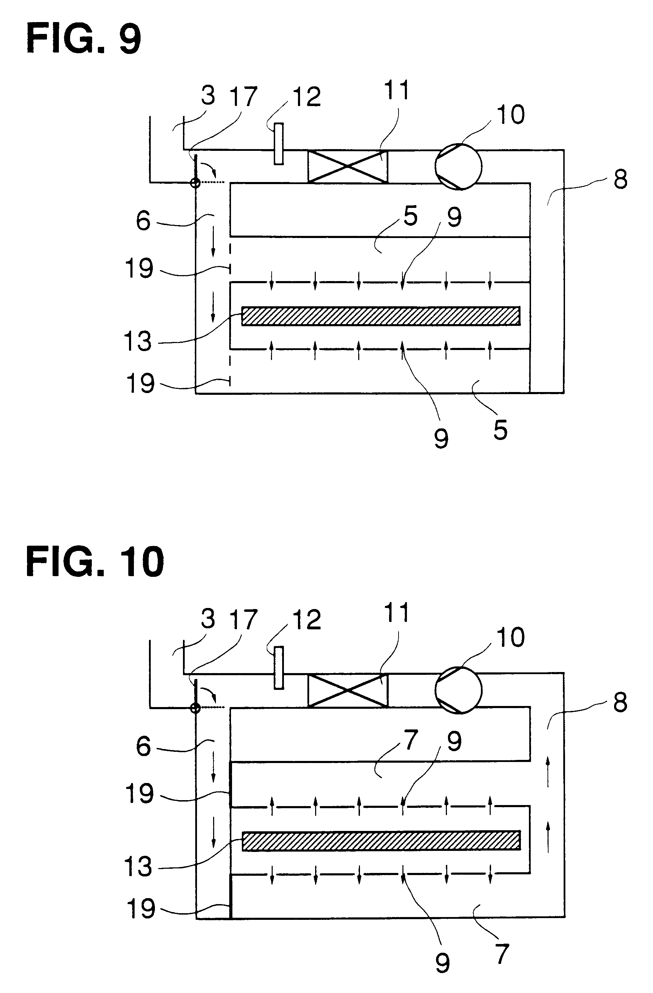

Im Normalbetrieb, d.h. wenn die Deckschicht 13 fortlaufend gefördert wird, stehen die Klappen so, wie in Fig. 7 dargestellt und die Luftförderung erfolgt so, wie in Fig. 6 und in den entsprechenden Schnitten der Fig. 9 und 10 gezeigt.

In den Fig. 5 und 8, die grundsätzlich denjenigen nach Fig. 4 bzw. 7 entsprechen, ist eine etwas andere Klappenkonstruktion dargestellt. Die Innenklappen sind daher bei dieser Ausführungsform nach den Fig. 5 und 8 mit 19a bezeichnet. Die Klappenstellung nach Fig. 5 entspricht derjenigen nach Fig. 4 und die Klappenstellung nach Fig. 8 entspricht derjenigen nach Fig. 7.

Die Steuerung der Temperatur, d.h. die Steuerung des Heizelementes 11 erfolgt bei Normalbetrieb, d.h. bei normaler Förderung der Deckschicht 13 durch einen externen Deckschichtentemperaturfühler 18. Bei diesem normalen Produktionsbetrieb stehen die Klappen so, wie in Fig. 7 und 8 bzw. 9 und 10 dargestellt. Die Luftströmung erfolgt so, wie in Fig. 6 durch entsprechende Pfeile angedeutet. Die aus dem Verdichter 10 austretende Luft wird in dem Heizelement aufgeheizt und bei Stellung der Außenklappe 17 in der in Fig. 1 gezeigten Stellung in den Zuförderkanal 6 geleitet. Da die Innenklappen 19 oder 19a, die in Fig. 7 bzw. Fig. 8 gezeigte Stellung einnehmen, tritt die erwärmte Luft in die Zuluftkanäle 5 ein und aus den Schlitzen 9 dieser Zuluftkanäle aus, und trifft auf die entsprechende Seite der Deckschicht 13 auf. Nach Abgabe der entsprechenden Wärmemenge strömt die Luft durch die Schlitze 9 der angrenzenden, abwechselnd angeordneten Rückführkanäle 7 zu dem Abförderkanal 8 und damit in den Eintrittsbereich des Verdichters 10. Der Kreislauf ist geschlossen und beginnt von neuem.

Wenn die Förderung der Deckschicht 13 unterbrochen wird, ergeht ein entsprechendes Steuersignal, durch das die Außenklappe 17 die in Fig. 1 gestrichelt gezeigte Stellung einnimmt und damit eine Förderung der Luft an die Umgebung erzwungen wird. Das Heizelement 11 wird gleichzeitig abgeschaltet. Die Innenklappen 19 nehmen die in Fig. 4 bzw. die Innenklappen 19a die in Fig. 5 gezeigte Stellung ein, so daß im Kurzschlußkreislauf gefördert wird, d.h. die Zuluftkanäle 5 werden nicht mit Luft versorgt. Die Luft tritt unmittelbar in die Rückluftkanäle ein und gelangt direkt zum Verdichter. Wenn die Vorrichtung entsprechend abgekühlt ist, wird die Außenklappe 17 wiederum betätigt, um die Abgabe der Luft an die Umgebung zu unterbrechen. Es erfolgt eine Förderung dann nur noch im kurzen Kreislauf, wobei ein interner Temperaturfühler 12 den Ist-Wert erfaßt und somit das Heizelement so steuert, daß die Deckschicht 13 auf der gewünschten Temperatur gehalten wird. Beim Wiederanfahren der Anlage wird auf den Deckschichtentemperaturfühler 18 umgeschaltet, so daß dann der Normalbetrieb wieder einsetzen kann und die Deckschicht fortlaufend mit der gewünschten Temperatur austritt und in das Doppelband gelangt.

In vorteilhafter Weise ist es möglich, die Klappen geregelt zu betätigen, d.h. nicht einfach auf- und zuzumachen, sondern durch entsprechende Zwischenstellungen für eine gleichmäßige Deckschichtentemperatur zu sorgen. Es ist auch möglich, die Klappen einzeln anzusteuern, und gestaffelt umzuschalten, um dieses zu erreichen. Eine weitere Möglichkeit besteht darin, die Umschaltung von dem internen Temperaturfühler auf den externen Deckschichtentemperaturfühler 18 zeitverzögert vorzunehmen.

Die Erfindung schafft für jede Deckschicht einen Vorwärmofen, in dem die erwärmte Luft in einem geschlossenen Kreislauf gefördert wird. Bei Unterbrechung der Bewegung der Deckschicht wird die erwärmte Restluft kurzzeitig abgeblasen und gleichzeitig erfolgt eine Förderung im Kurzschlußkreislauf, um eine weitere Erwärmung der Deckschicht zu vermeiden. In diesem Kurzschlußkreislauf wird der Ofen und damit die Deckschicht auf einer Temperatur gehalten, die ein problemloses Wiederanfahren mit der gewünschten Deckschichttemperatur ermöglicht. Durch die abwechselnd quer zur Förderrichtung auf der Ober- und Unterseite verlaufenden Zuluft- und Rückluftkanäle ist ein guter Wärmeübergang mit hoher Energiedichte gewährleistet. Die Kreisfahrweise sorgt im Normalbetrieb für ein wirtschaftliches Arbeiten, da keine Luft an die Umgebung abgegeben wird. Dieses geschieht lediglich kurzzeitig bei Unterbrechung, um eine zu starke Erwärmung der Deckschicht zu verhindern.

## Patentansprüche

1. Verfahren zum Erwärmen von Deckschichten zur Herstellung von Sandwichelementen aus Mehrkomponenten-Kunststoffen, bei dem die zu erwärmende Deckschicht kontinuierlich durch einen Ofen gefördert wird, in dem Luft durch ein durch einen Deckschichtentemperaturfühler gesteuertes Heizelement (11) erwärmt und durch einen Verdichter (10) umgewälzt wird, dadurch gekennzeichnet, daß die Luft in dem Ofen (1 oder 2) während der Förderung der Deckschicht (13) in einem geschlossenen Kreislauf derart umgewälzt wird, daß sie auf beide Seiten der Deckschicht und abwechselnd quer zu ihrer Förderrichtung auf diese auftrifft und nach dem Auftreffen von dieser zur Aufrechterhaltung des geschlossenen Kreislaufes abgefördert wird, und daß die Luft bei Unterbrechung der Förderung der Deckschicht in einem kurzgeschlossenen Kreislauf derart gefördert wird, daß sie nicht mehr auf die Deckschicht auftrifft, und daß die Luft aus dem Ofen abgeblasen wird, bis eine eingestellte Lufttemperatur erreicht ist.

2. Vorrichtung zum Erwärmen von Deckschichten zur Herstellung von Sandwichelementen aus Mehrkomponenten-Kunststoffen mit einem Ofen (1 oder 2), durch den die zu erwärmende Deckschicht (13) kontinuierlich gefördert wird, einem durch einen Deckschichtentemperaturfühler (18) gesteuerten Heizelement (11) und einem Verdichter (10) zum Umwälzen der Luft, dadurch gekennzeichnet, daß über und unter der Deckschicht (13) quer zu ihrer Förderrichtung verlaufende und sich abwechselnde Zuluft- und Rückluftkanäle mit auf die Deckschicht gerichteten Aus- und Eintrittsöffnungen (9) angeordnet sind, durch die die erwärmte Luft während der Förderung der Deckschicht in einem geschlossenen Kreislauf umgewälzt wird, und daß Einrichtungen (17,19;19a) vorgesehen sind, die bei Unterbrechung der Förderung die Luft aus dem Ofen abblasen, bis eine eingestellte Temperatur erreicht ist und die Kreislaufförderung derart kurzschließen, daß die Zuführkanäle (5) aus dem Kreislauf ausgeschaltet sind.

3. Vorrichtung nach Anspruch 2, dadurch gekennzeichnet, daß die Einrichtungen zum Abblasen der Luft und zum Kurzschließen des Luftkreislaufs unter Abschaltung der Zuführkanäle (5) durch unabhängig voneinander betätigbare Außen- und Innenklappen (17,19;19a) gebildet sind, wobei die Innenklappen (19) oder (19a) den Eintritt der im Kreislauf geförderten Luft in die Zufuhrkanäle (5) unterbrechen und gleichzeitig direkt in die Zuluftkanäle (7) leiten und die Außenklappen (17) das zeitweilige Abblasen der erwärmten Luft steuern.

4. Vorrichtung nach Anspruch 2, dadurch gekennzeichnet, daß die Aus- und Eintrittsöffnungen Schlitze (9) sind, die quer zur Förderrichtung der Deckschicht (13) verlaufen.

5. Vorrichtung nach einem der vorstehenden Ansprüche 2 bis 4, dadurch gekennzeichnet, daß das Heizelement ein elektrisches Widerstandsheizgerät (11) mit kurzer Nachheizzeit und geringer Masse des Heizgitters ist.

6. Vorrichtung nach einem der vorstehenden Ansprüche 2 bis 5, dadurch gekennzeichnet, daß neben dem externen Deckschichtentemperaturfühler (18) ein interner Temperaturfühler (12) in dem Luftkreislauf vorgesehen ist, der zur Steuerung des Heizelementes (11) und der Außenklappe (17) die Lufttemperatur (Istwert) im kurzgeschlossenen Kreislauf bei nicht geförderter Deckschicht (13) erfaßt.

7. Vorrichtung nach einem der vorstehenden Ansprüche 2 bis 6, dadurch gekennzeichnet, daß die Innenklappen (19 oder 19a) geregelt betätigbar sind, um eine gleichmäßige Deckschichtentemperatur beim Anfahren zu erreichen.

8. Vorrichtung nach einem der Ansprüche 2 bis 7, dadurch gekennzeichnet, daß die Innenklappen (19 oder 19a) einzeln ansteuerbar und gestaffelt umzuschalten sind, um eine gleichmäßige Deckschichtentemperatur beim Anfahren zu erreichen.

9. Vorrichtung nach Anspruch 6, dadurch gekennzeichnet, daß die Umschaltung der Steuerung des Heizelementes (11) von dem internen Temperaturfühler (12) auf den externen Deckschichtentemperaturfühler (18) zeitverzögert erfolgt.

## Claims

1. A method of heating facings for the manufacture of sandwich elements from multicomponent plastics, wherein the facing to be heated is continuously conveyed through an oven in which air is heated by a heating element (11) controlled by a facing temperature sensor and is circulated by a compressor (10), characterised in that the air in the oven (1 or 2) is circulated in a closed circuit during the conveying of the facing (13) in such a way that it impinges on both sides of the facing and impinges on the facing alternately, transverse to the direction of conveying of the latter, and after impingement is conveyed from the facing to maintain the closed circuit, and that, when the conveying of the facing is interrupted, the air is conveyed in short-circuited circulation in such a way that it no longer impinges on the facing, and that the air is blown off from the oven until a set air temperature is reached.

2. An apparatus for heating facings for the manufacture of sandwich elements from multicomponent plastics, having an oven (1 or 2) through which the facing (13) to be heated is continuously conveyed, a heating element (11) controlled by a facing temperature sensor (18), and a compressor (10) for circulating the air, characterised in that alternating air supply and air return ducts having outlet and inlet openings (9) directed towards the facing are disposed above and below the facing (13) transverse to the direction of conveying of the latter, through which ducts the heated air is circulated in a closed circuit during the conveying of the facing, and that devices (17, 19; 19a) are provided, which blow off the air from the oven when conveying is interrupted until a set temperature is reached, and which short circuit the circulating conveying in such a way that the supply ducts (5) are disconnected from the circuit.

3. An apparatus according to claim 2, characterised in that the devices for blowing off the air and for short-circuiting the air circulation with disconnection of the supply ducts (5) are formed by eternal and internal swing valves (17, 19; 19a) which can be operated independently of each other, wherein the internal swing valves (19) or (19a) stop the entry of the air conveyed in the circuit into the supply ducts (5) and at the same time lead it directly into the air return ducts (7), and the external swing valves (17) control the temporary blow-off of the heated air.

4. An apparatus according to claim 2, characterised in that the outlet and inlet openings are slots (9) which run transversely to the direction of conveying of the facing (13).

5. An apparatus according to any one of the preceding claims 2 to 4, characterised in that the heating element is an electrical resistance heating device (11) with a short reheating time and a low mass of the heating grid.

6. An apparatus according to any one of the preceding claims 2 to 5, characterised in that in addition to the eternal facing temperature sensor (18) an internal temperature sensor (12) is provided in the air circuit, which internal temperature sensor senses the air temperature (actual value) in the short-circuited circuit when the facing (13) is not being conveyed, in order to control the heating element (11) and the eternal swing valve (17).

7. An apparatus according to any one of the preceding claims 2 to 6, characterised in that the internal swing valves (19 or 19a) can be operated in a controlled manner in order to achieve a uniform facing temperature on starting.

8. An apparatus according to any one of claims 2 to 7, characterised in that the internal swing valves (19 or 19a) can be operated individually and are changed over in a staggered manner in order to achieve a uniform facing temperature on starting.

9. An apparatus according to claim 6, characterised in that changeover of the control of the heating element (11) from the internal temperature sensor (12) to the external facing temperature sensor (18) is effected with a time delay.

## Revendications

1. Procédure destinée à l'échauffement de couches de revêtement pour la fabrication d'éléments en sandwich en plastique multi-composant, dans laquelle la couche de revêtement à chauffer est transportée en continu à travers un four dans lequel de l'air est chauffé par un élément de chauffage (11) commandé par une sonde de température de couche de revêtement et mis en circulation par un compresseur (10), **caractérisé par le fait** que l'air du four (1 ou 2) circule pendant l'acheminement de la couche de revêtement (13) dans un circuit fermé de telle sorte qu'il a un impact sur les deux côtés de la couche de revêtement et sur la couche de revêtement, à la transversale par rapport à la direction de son acheminement, en alternance, et est évacué, après l'impact sur la couche de revêtement, pour maintenir le circuit fermé, et que l'air est transporté, en cas d'interruption du transport de la couche de revêtement dans un circuit fermé, de telle sorte qu'il n'a plus d'impact sur la couche de revêtement et que l'air est évacué par soufflage du four jusqu'à ce qu'une température réglée de l'air ait été atteinte.

2. Dispositif destiné à l'échauffement de couches de revêtements pour la fabrication d'éléments en sandwich en plastique multi-composant avec un four (1 ou 2) par lequel la couche de revêtement à chauffer (13) est transportée en continu, un élément de chauffage (11) commandé par une sonde de température de couche de revêtement (18) et un compresseur (10) pour la circulation de l'air, **caractérisé par le fait** que des canaux d'admission et de retour d'air alternants sont disposés au-dessus et au-dessous de la couche de revêtement (13) transversalement à la direction de son acheminement, avec orifices d'entrée et de sortie (9) orientés sur la couche de revêtement, canaux par lesquels l'air chauffé circule pendant le transport de la couche de revêtement dans un circuit fermé et que des dispositifs (17,19;19a) sont prévus pour évacuer l'air du four par soufflage en cas d'interruption du transport jusqu'à ce qu'une température réglée soit atteinte et court-circuiter le transport en circuit de telle sorte que les canaux d'entrée (5) soient désactivés dans le circuit.

3. Dispositif selon la demande 2, **caractérisé par le fait** que les dispositifs d'évacuation de l'air par soufflage et de court-circuitage du circuit d'air avec désactivation des canaux d'entrée (5) soient constitués par des clapets extérieurs et intérieurs (17,19;19a) actionnables indépendamment l'un de l'autre, les clapets intérieurs (19) ou (19a) interrompant l'entrée de l'air transporté dans le circuit dans les canaux d'entrée (5) et le transportant en même temps directement dans les canaux d'admission d'air (7) et les clapets extérieurs (17) commandant l'évacuation temporaire de l'air chauffé.

4. Dispositif selon la demande 2, **caractérisé par le fait** que les orifices d'entrée et de sortie sont des fentes (9) placées à la transversale par rapport au sens du transport de la couche de revêtement (13).

5. Dispositif selon l'une des demandes 2 à 4 précédentes, **caractérisé par le fait** que l'élément de chauffage est une résistance électrique (11) avec temps de postchauffage court et grille de chauffage de faible dimension.

6. Dispositif selon l'une des demandes 2 à 5 précédentes, **caractérisé par le fait** que, parallèlement à la sonde de température externe de couche de revêtement (18), une sonde de température interne (12) est prévue dans le circuit d'air, laquelle sert à la commande de l'élément de chauffage (11) et du clapet extérieur (17) et détecte à cette fin la température de l'air (valeur réelle) dans le circuit court-circuité durant le non-transport de la couche de revêtement (13).

7. Dispositif selon l'une des demandes 2 à 6 précédentes, **caractérisé par le fait** que les clapets intérieurs (19 ou 19a) sont actionnables par régulation afin d'obtenir une température uniforme de la couche de revêtement lors du démarrage.

8. Dispositif selon l'une des demandes 2 à 7, **caractérisé par le fait** que les clapets intérieurs (19 ou 19a) sont commandables individuellement et commutables par échelonnement, afin d'obtenir une température uniforme de la couche de revêtement lors du démarrage.

9. Dispositif selon la demande 6, **caractérisé par le fait** que la commutation de la commande de l'élément de chauffage (11) de la sonde de température interne (12) à la sonde de température externe de la couche de revêtement (18) s'effectue avec temporisation.
